# EUROPÄISCHE PATENTANMELDUNG

(11) **EP 0 989 350 A2**
(43) Veröffentlichungstag der Anmeldung: **29.03.2000**
(21) Anmeldenummer: 99117839.3
(22) Anmeldetag: 10.09.1999
(51) Int. Cl.: F16L 37/084

(54) **Leitungskupplung für Leitungsstränge, wie Rohrleitungen von Schmiervorrichtungen o. dgl.**

(30) Priorität: 22.09.1998 DE 19843310
(71) Anmelder: BIELOMATIK LEUZE GmbH + Co., D-72639 Neuffen (DE)
(72) Erfinder: Neumann, Gunther, 72622 Raidwangen (DE)
(74) Vertreter: Patentanwälte Ruff, Beier, Schöndorf und Mütschele

(57) **Zusammenfassung**

Eine Kupplung (1) zum zerstörungsfrei lösbaren Anschluß eines dünnen Rohres (2) weist in Anschluß-Steckrichtung (11) des Rohres (2) nach der Dichtung (9) Krallelemente (37) zur formschlüssigen Verankerung auf. Zum Lösen oder Ausrücken dieser Verankerung (55) ist eine manuell verschiebbare Einheit (14) vorgesehen, mit der auch die Dichtung (9) verschoben wird. Die Krallelemente (37) werden dabei nicht überdehnt und das Rohr (2) kann sich wie die Einheit (14) radial günstig ausrichten. Dadurch ergibt sich bei einfachem Aufbau und hoher Dichtheit eine sehr fest sitzende Anbindung des Rohres (2).

## Beschreibung

Die Erfindung betrifft eine Kupplung für Leitungen bzw. Stränge, wie Rohrleitungen. Diese sind über die Länge, mit welcher sie in die Kupplung eingreifen bzw. über ihre gesamte Länge durchgehend konstant zylindrisch sowie zur Leitung von Medien geeignet, die unter Druck stehen. Solche Medien können Flüssigkeiten, wie Schmiermittel, oder Gase, wie Luft, sein. Der Außendurchmesser des Rohres beträgt weniger als 15, 10, 8 oder 5 mm. Das Rohr besteht zweckmäßig aus Kunststoff, wie Polyamid, so daß der Strang biegeelastisch krümmbar ist. Das Rohr ist für Drücke über 5, 20, 40 oder 70 bar, z.B. 100 bar geeignet, weshalb die Kupplung trotz zerstörungsfreier Lösbarkeit des Rohres entsprechend druckdicht sein soll.

Ferner soll die Kupplung dazu geeignet sein, das Rohr allein durch eine axiale bzw. lineare Steckbewegung druckdicht anzukuppeln bzw. durch eine entgegengesetzte Lösebewegung nur das Rohr ohne weitere Kupplungsteile aus der Kupplung herauszuziehen. Trotzdem soll das gekuppelte Rohr gegen Herausziehen mit einer Verriegelung formschlüssig gesperrt sein. Hierzu sind Sperrflächen vorgesehen, welche mit zunehmender Kraft, die auf das Rohr in Löserichtung wirkt, verstärkt in das Material des Rohres eindringen bzw. sich am Rohr radial abstützen. Das Rohr muß zum Lösen vom Sperreingriff dieser Sperrflächen entlastet werden. Hierzu können die Sperrflächen mit einer Entriegelung vom Rohr abgehoben bzw. berührungsfrei ausgerückt werden. Dann ist das Rohr für sich zerstörungsfrei aus der Kupplung zu entnehmen.

Zur Erzielung der Dichtheit kann eine einzige Dichtung oder es können mehrere Dichtungen vorgesehen sein. Jede ist z.B. durch einen O-Ring gebildet. Er hat in entspanntem Zustand kreisrunde Materialquerschnitte. Er besteht aus einem Elastomer. Diese Dichtung liegt unmittelbar am Rohr bzw. nur an dessen Außenumfang an. Sie ist gegenüber dem Grundkörper der Kupplung oder unmittelbar an diesem Grundkörper vorgespannt abgestützt. Die Anlagefläche des Rohres für die Dichtung muß möglichst glatt sein. Deshalb darf sie beim Einstecken des Rohres nicht beschädigt werden. Eine solche Beschädigung kann aber durch die Sperrflächen eintreten, wenn die Anlagefläche vor Erreichen der Dichtung zunächst an den Sperrflächen vorbeiläuft. Auch die Entriegelung kann bei versehentlicher Betätigung oder in Folge vibrationsbedingter Bewegungen eine Beschädigung des Rohres bewirken, wenn ihre Lösekraft ungefedert auf das Sperrglied und von diesem erst auf die Dichtung übertragen wird.

Liegt die Dichtung an Stirnflächen mit größerer Dichtungspressung als an Umfangsflächen des Rohres und des Grundkörpers der Kupplung an, so können ebenfalls bei Vibrationen leicht Undichtheiten auftreten. Solche Vibrationen wirken sich besonders dann auf die Kupplung aus, wenn die Entriegelung Spiel, wie axiales Spiel hat. Weicht das Sperrglied z.B. beim Erstgebrauch im entspannten Zustand von der ebenen Form ab oder stark ab, so können im Sperreingriff seine Sperrkräfte verhältnismäßig niedrig sein. Das beeinträchtigt den sicheren Halt und Dichtungseingriff des Rohres. Diese Beeinträchtigung ergibt sich auch, wenn die Dichtung bzw. das Sperrglied im Sperreingriff Bewegungsspielraum, insbesondere axiales Bewegungsspiel, haben. Die Festigkeit des Sperreingriffes kann ferner beeinträchtigt sein, wenn das Sperrglied beim Sperreingriff im Anschluß an seine radial am weitesten vom Rohr entfernte Begrenzung eben, z.B. ringscheibenförmig, ist, weil dann das Sperrglied nur über einen inneren Teil seiner Radialerstreckung federnd ausgelenkt wird. Das genannte Bewegungsspiel von Dichtung bzw. Sperrglied ist auch bei entferntem Rohr nachteilig. Dann ist beim Einsetzen des Rohres die Lage dieser Glieder nicht genau bestimmbar.

Die Dichtung kann auch zur Übertragung der Lösungskräfte zwischen zwei Ausrückgliedern angeordnet sein, von denen das innere so unmittelbar am Sperrglied anliegt. Wird dabei die Lösebewegung von einer Drehbewegung des Ein- und Ausrückgliedes abgeleitet, so ergibt sich ein sehr komplizierter Aufbau. Ferner ist die Lösestellung selbst hemmend festgesetzt, so daß eine sichere Verriegelung nicht immer gewährleistet ist. Ist das Sperrglied dabei in entspanntem Zustand stumpfwinklig konisch mit Einschnitten, die von der inneren und der äußeren Umfangskante ausgehen, so ist nicht nur die Herstellung schwierig, sondern dieses Sperrglied gewährleistet auch keinen sicheren Halt und kann im Bereich dünner, radialer Verbindungstege zu Bruch gehen. So kann es auch nachteilig sein, wenn das Sperrglied bei nicht eingesetztem Rohr und Ausgangs-bzw. Ruhestellung der Entriegelung entspannt ist, weil es dann gegenüber dem Grundkörper beweglich ist und eine ungünstige Lage einnehmen kann. Liegt das zugehörige Ausrückglied in der Sperrstellung mit einer breiteren Ringfläche unmittelbar anschließend an das Rohr an dem Sperrglied an, so ergeben sich beim Lösen ungünstige Hebelverhältnisse und das Sperrglied kann beim Lösen bleibend verformt werden, wenn es radial außerhalb dieser Ringfläche gegen die Lösekraft an einem Anschlag festgesetzt ist. Ein weiterer Nachteil einer solchen Ausbildung kann darin bestehen, daß das Sperrglied beim Einsetzen des Leitungsstranges von der Entriegelung nicht abhebt, weil es durch die in der Lösestellung verbleibende Entriegelung bereits aus dem Bewegungsweg des Rohres herausgespannt ist und dann erst in Eingriff mit dem Rohr kommt, wenn durch unmittelbare, manuelle Betätigung eines Ausrückgliedes die Entriegelung in die Sperrsellung überführt worden ist.

Der Erfindung liegt die Aufgabe zugrunde, eine Leitungskupplung zu schaffen, bei welcher Nachteile bekannter Ausbildungen bzw. der beschriebenen Art vermieden sind und die insbesondere bei kompakter Bauweise, leichter Montierbarkeit und zerstörungsfreier Lösbarkeit des Rohres eine hohe Dichtheit über eine lange Zeitdauer gewährleistet.

Erfindungsgemäß sind die Merkmale nach dem kennzeichnenden Teil des Anspruches 1 einzeln oder in beliebiger Kombination vorgesehen. Liegt der Sperreingriff bzw. die Sperrfläche in Steckrichtung nach der Dichtung, so kann die Sperrfläche beim Einstecken des Rohres dessen Anlagefläche für die Dichtung nicht beschädigen. Trotzdem kann das Rohr gelöst werden, ohne daß es zuvor gemeinsam mit einer das Sperrglied bzw. die Dichtung tragenden Schraubmuffe vom Grundkörper entfernt, dann sein Ende an der Schraubmuffe abgetrennt und schließlich dieses Ende in Steckrichtung aus der Schraubmuffe ausgestoßen werden muß. Wird die Lösekraft der Entriegelung wenigstens teilweise von der Dichtung übertragen, ist einerseits eine schonende Dämpfung dieser Übertragung gewährleistet und andererseits kann dadurch beim Lösen die Dichtungspressung erhöht und so während des Lösens die Zentrierung des Rohres verbessert werden. Ferner kann hierdurch eine gewisse Schwergängigkeit der Entriegelung gegen versehentliche Betätigung erzielt werden. Dies wird auch dadurch erreicht, daß die Dichtung quer zur Steckrichtung eine größere Dichtungspressung als parallel zur Steckrichtung hat bzw. in Steckrichtung im wesentlichen spannungsfrei ist. Hält die Dichtung die Entriegelung axial bzw. radial spielfrei und elastisch gedämpft, so sind Undichtheiten durch Vibrationen vermieden. Ist das Sperrglied in entspanntem Zustand eben, so wird es für den Sperreingriff verhältnismäßig weit ausgelenkt. Das bewirkt bei progressiver Federcharakteristik hohe Sperrkräfte auch dann, wenn die Abmessungen des Sperrgliedes sehr klein gewählt werden. Die Dichtung kann auch in Steckrichtung gegen das Sperrglied drücken und es so vorgespannt gegenüber dem Grundkörper spielfrei halten. Die Sperrkräfte des Sperrgliedes werden noch weiter erhöht, wenn es im Sperreingriff nicht nur über einen Teil seiner Radialerstreckung, sondern bis zu seiner radial am weitesten vom Rohr entfernten Begrenzung gekrümmt ist und in diesem Bereich nicht eben gehalten wird. Stützt sich das Sperrglied bei entferntem Rohr unter Vorspannung an der Dichtung ab, so nehmen beide Teile sowie ggf. weitere, an diesen Teilen anliegende Teile der Entriegelung genau definierte Lagen, insbesondere Axiallagen, ein, wodurch ein genaues bzw. sicheres und daher eine hohe Dichtheit gewährleistendes Einführen des Rohres erleichtert wird.

Löst die Entriegelung den Sperreingriff allein durch axiale Betätigung an einer Druckfläche, so sind Steigungsglieder, wie Nockenkurven, nicht erforderlich, um die Axialbewegung zu erzeugen. Solche Steigungsglieder haben auch den Nachteil, daß sie den axiale Lösehub begrenzen, und zwar unabhängig von den Toleranzabweichungen der Ausrückglieder bzw. der Dichtung, deren elastischer Druckwiderstand schon unmittelbar nach der Herstellung unterschiedlich ausfallen und sich durch Alterung sehr erheblich ändern kann. Dadurch daß der Querschnitt der Dichtung bei eingesetztem Rohr in Steckrichtung größer als quer oder radial dazu ist, werden die Dichtwirkung sowie die axiale Festlegung der Dichtungslage wesentlich verbessert. Ist die Entriegelung frei von Steigungsgliedern, so ist sowohl ihre Montage als auch ihre Betätigung wesentlich vereinfacht. Dies gilt auch, wenn das Sperrglied bei Ruhestellung der Entriegelung und bei nicht eingesetztem Rohr nicht entspannt ist, weil es dann in der Sperrstellung eine entsprechend erhöhte Federspannung hat. Gleitet das Sperrglied beim Lösen mit einer gekrümmten Fläche an der Entriegelung, so ergeben sich Linienberührung, günstige Hebelverhältnisse und ein zur Kupplungsachse möglichst naher Angriff der Lösekraft. Weist das Sperrglied radial außen einen durchgehenen Ringkranz mit entsprechend durchgehender Kantenfläche als äußerste ringförmige Begrenzung auf, so hat das Sperrglied eine hohe Dauerstabilität und kann trotzdem, z. B. im Verhältnis zur Wandungsdicke des Rohres, sehr dünn ausgebildet werden. Zweckmäßig ist das Sperrglied so ausgebildet, daß es in der Ruhestellung in den Bewegungsweg des Rohres reicht und daher beim Einsetzen des Rohres von der Entriegelung abhebt, weil dann schon der erste Eingriff des Rohres in das Sperrglied beim Einsetzen zur Sperrung gegen Rückzug führt.

Im Sperreingriff kann das Sperrglied zur Kupplungsachse hin in Steckrichtung schräg ansteigen, beispielsweise torusförmig oder konisch sein. Dadurch bildet es eine radial äußere Abschirmung für ein Glied der Kupplung, beispielsweise ein Ausrückglied der Entriegelung, welches vom Sperrglied umhüllt ist. Dieses Glied liegt, wie auch das Sperrglied, in einem gegenüber dem Rohrinneren nicht, jedoch nach außen allein durch die Dichtung abgedichteten Gehäuseraum. Dieser umgibt und grenzt an das Rohr, so daß die Glieder beispielsweise im zu leitenden Medium liegen und darin bewegt werden.

Statt einer beiderseitigen, flächigen Abstützung des radial äußeren Randes des Sperrgliedes am Grundkörper ist zweckmäßig an einer Seite eine Abstützung nur für die zugehörige Linienkante des Sperrgliedes vorgesehen. Diese Linienkante ist nur von zwei im Winkel zueinander liegenden Flächen, nämlich einer großen Oberfläche und einer dazu rechtwinkligen Kantenfläche flankiert. Die Kante liegt an der Seite, zu welcher hin das Sperrglied beim Einführen des Rohres ausgelenkt wird. So kann sich das Sperrglied von den radial inneren Sperrflächen bis zur radial äußeren Kante über die größtmögliche Radialerstreckung frei krümmen.

Die Ausrückeinheit der Entriegelung ist aus der anschlagbegrenzten Ausgangslage gegen das Sperrglied bewegbar. Sie krümmt das Sperrglied in der zuvor genannten Weise und Richtung. So kommt letzteres vom Rohr vollständig frei. Die Ausrückeinheit besteht aus nur zwei bzw. drei jeweils einteiligen Gliedern. Von denen ist eines die Dichtung. Dadurch kann das andere Glied bzw. können die beiderseits der Dichtung liegenden gesonderten Glieder der Ausrückeinheit Anlageflächen zur axialen Abstützung der Dichtung aufweisen. Die Anlageflächen sind härter als die Dichtung und werden wie die zugehörigen Glieder beim Entriegeln nicht verformt. Sie können sich jedoch beim Entriegeln einander geringfügig annähern. Z.B. wenn die Dichtung unter der Lösekraft durch Quetschung geringfügig verformt bzw. axial verkürzt wird. Jede der Anlageflächen kann rechtwinklig zur Bewegungsrichtung der Ausrückeinheit liegen bzw. eben sein. So führt sie bei Übertragung der Lösekraft auf die Dichtung nicht zu deren Radialverschiebung. Die Anlagefläche kann aber auch so geneigt bzw. konisch sein, daß eine solche Radialverschiebung nach außen gegen die äußere Umfangs- und Anlagefläche für die Dichtung gerichtet ist. Wird das Rohr herausgezogen und läuft sein Ende an der Dichtung vorbei, so wird letztere durch diese Ausbildung nicht radial nach innen gedrückt.

Zwischen der Dichtung und dem Sperrglied liegt nur ein einziges Glied, nämlich das am Sperrglied unmittelbar angreifende Ausrückglied. Dieses kann an einer einteiligen Fläche bzw. einem Innenumfang des Grundkörpers geführt sein, an welcher auch das andere Ausrückglied und die Dichtung anliegen sowie geführt sind.

Bei entnommenem Rohr kehrt das Sperrglied nicht in seinen entspannten Zustand zurück. Es bleibt durch Anschlag in derselben Richtung vorgespannt wie beim Sperreingriff, jedoch geringer vorgespannt. Dadurch läßt sich das Rohr beim Einstecken leichter und ohne besonders starken Abrieb durch die Sperrflächen in Sperreingriff bringen. Die genannte einteilige Fläche des Grundkörpers bildet hierbei den Gegenanschlag für die Ausrückeinheit. Diese Fläche ist durch ein Führungsglied, wie eine Hülse, des Grundkörpers gebildet. Zur Montage wird die Ausrückeinheit, jedes der Ausrückglieder und das Sperrglied entgegen Steckrichtung mit dem Führungsglied verbunden und dann die so gebildete, vormontierte Einheit dicht in eine napfförmige Vertiefung eines Gehäuses des Grundkörpers starr eingesetzt. Der Boden dieser Vertiefung ist von einem Kanal durchsetzt, welcher an das Ende des Rohrkanales anschließt.

Das Führungsglied kann zwar durch Schraubung in die Vertiefung bzw. Bohrung des Gehäuses eingesetzt werden, jedoch ist hierzu zweckmäßig ein Preßsitz vorgesehen. Dadurch genügt eine reine Axialbewegung für die Montage des Führungsgliedes im Gehäuse. Alle übrigen Teile der Kupplung sind frei von Verschraubungen, Gewinden oder Federn.

Auch für das Führungsglied können Mittel vorgesehen sein, um es durch die Betriebsbelastungen, wie die Vorspannung der Dichtung, radial nach außen zu belasten und dadurch den Eingriff in das Gehäuse zu verstärken. Hierzu können die Anschlagflächen zwischen Ausrückeinheit und Führungsglied entsprechend geneigt oder konisch sein.

Zweckmäßig erfolgt die axiale Begrenzung des Ausrück- oder Lösehubes des Sperrgliedes durch dessen direkten Anschlag am Grundkörper, da dann eine Überdehnung des Sperrgliedes ausgeschlossen ist.

Diese und weitere Merkmale der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: eine erfindungsgemäße Kupplung, rechts im Axialschnitt, links teilweise in Ansicht sowie in Kupplungsstellung,
- Fig. 2: einen Ausschnitt einer weiteren Ausführungsform einer Dichtung im Schnitt gemäß Fig. 1, und
- Fig. 3: ein Detail einer weiteren Ausführung im Axialschnitt

Die Kupplung 1 dient zur abgedichteten Verbindung eines Leitungsstranges oder Rohres 2 mit einem medienführenden Grundkörper 3, um den Kanal des Rohres 2 mit einem Kanal des Körpers 3 unmittelbar leitungszuverbinden. Die Kupplung 1 ist durch Glieder 4 bis 9 gebildet. Diese umfassen ein Führungsglied 4 des Grundkörpers 3, ein zur Kupplung 1 gehörendes oder nicht gehörendes Gehäuse 5 des Grundkörpers 3 zur starren Verbindung mit dem Glied 4 sowie in entgegengesetzten Richtungen axial und um die Kupplungsachse 10 drehend bewegbare Glieder 6 bis 9. Diese Glieder umfassen ein Sperrglied 6, zwei gesonderte oder einteilige Ausrückglieder 7, 8 und eine Dichtung 9. Alle genannten Teile liegen in der Achse 10 und können in ihren Querschnitten ringförmig sein. Der Körper 5 ist z.B. das Gehäuse eine Progressivverteilers für Schmiermittel, an dem eine Mehrzahl von Kupplungen 1 nebeneinander bzw. in einer gemeinsamen Axialebene vorgesehen sein können. Das Rohr 2 wird zur Verbindung mit dem Körper 3 parallel zur Achse 10 in Richtung 11 in die Kupplung 1 über eine Länge eingesteckt, die mehrfach größer als sein Außendurchmesser ist. Zum zerstörungsfreien Lösen wird das Rohr 2 in der entgegengesetzten Richtung 12 aus der Kupplung 1 herausgezogen, wobei alle genannten Glieder 4 bis 9 der Kupplung 1 am Körper 3 verbleiben.

Das Glied 6 ist in entspanntem Zustand eben scheibenförmig oder torusförmig. Es hat eine gegenüber dem Rohrmantel kleinere Dicke von weniger als einem oder einem halben Millimeter und ist ein rückfedernder Ring. Das Glied 7 ist ein flacher Ring. Das Glied 8 ist eine gegenüber ihrem Außendurchmesser kürzere Hülse. Die Dichtung 9 hat in entspanntem Zustand kreisrunde und im eingebauten Zustand ovale Querschnitte. Sie sind in Richtung 11, 12 langgestreckt. Jedes der Glieder 4 bis 9 ist einteilig ausgebildet. Jedes der Glieder 2 und 4 bis 8 kann aus Metall, wie Stahl, oder Kunststoff bestehen, ist drucksteif und kann ein Rotationskörper sein. Das Glied 6 ist zweckmäßig ein Stanzteil bzw. seine Sperrfläche härter als die Eingriffsfläche des Rohres 2.

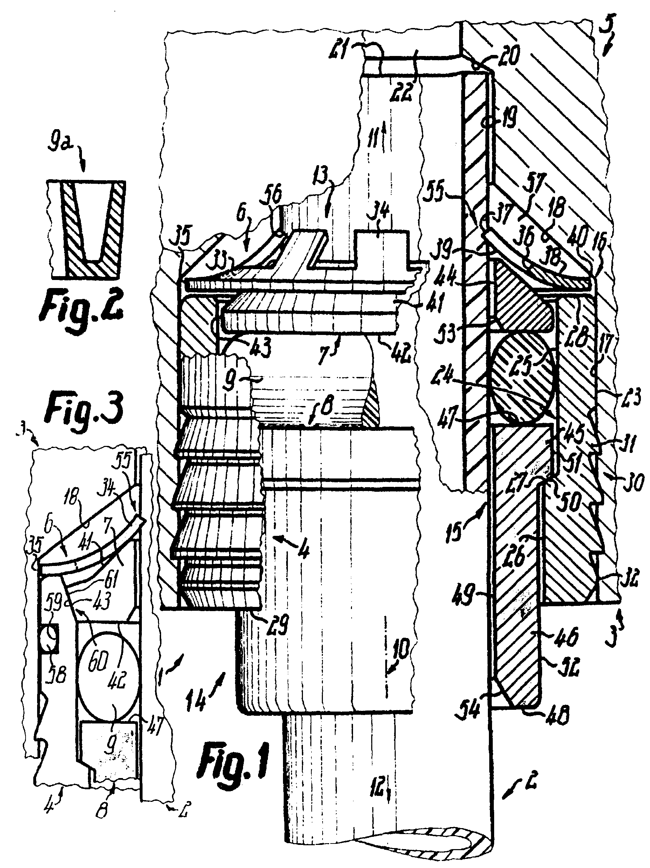

Die Glieder 2, 4, 6 bilden eine spielfrei starre Verriegelung 13 und die Glieder 6 bis 9 eine Entriegelung 14 zur Freigabe des Rohrs 2 von der Verriegelung 13 vor dem Herausziehen. Hierzu weist die Entriegelung 14 eine Ausrückeinheit 15 auf. Sie ist aus der Verriegelungsstellung gemäß Fig. 1 in Richtung 11 gegenüber dem Körper 3 manuell gegen das Sperrglied sowie gemeinsam mit Teilen des Sperrgliedes 6 verschiebbar.

Zur Aufnahme der Kupplung 1 weist das Gehäuse 5 eine mehrfach abgestufte Bohrung 16 auf. Deren weitester, zylindrischer Abschnitt 17 dient zum Einführen der Hülse 4 und ist gegenüber seinem Durchmesser kürzer. Der in Richtung 11 anschließende Abschnitt 18 ist ein Innenkonus. Dessen Schrägfläche liegt dem Sperrglied 6 unmittelbar gegenüber. Der an das engere Ende des Konus' anschließende Abschnitt 19 der Bohrung 17 ist eng an den Außendurchmesser des Rohres 2 angepaßt, gibt dessen Ende jedoch ein geringes Radialspiel. An den Abschnitt 19 schließt in Richtung 11 wiederum ein Innenkonus an. Dessen Schrägfläche bildet einen Anschlag 20 für das zur Achse 10 rechtwinklige Ende 21 des Rohres 2. An das engere Ende des Abschnittes 20 schließt in Richtung 11 als Bohrung ein Kanal 22 an. Dessen Weite entspricht der Innenweite des Rohres 2.

Das Führungsglied 4 weist äußere und innere Umfangsflächen 23, 24 auf. Der Innenumfang 24 hat einen erweiterten Abschnitt 25 und einen axial daran anschließenden Abschnitt 26. Der ist enger und kürzer als der Abschnitt 25. Beide Abschnitte 25, 26 sind jeweils durchgehend zylindrisch. Der Abschnitt 25 reicht bis zur inneren Endfläche 28 des Gliedes 4 und der Abschnitt 26 bis zur äußeren Endfläche 29, die in einer gemeinsamen Ebene mit der zugehörigen Außenfläche des Gehäuses 5 liegt und bündig abschließt. Die Abschnitte 25, 26 gehen über eine schräge bzw. konische Schulter 27 unmittelbar ineinander über. Sie liegt näher bei der Fläche 29 als bei der Fläche 28.

Axial beiderseits der ununterbrochen durchgehenden Ringschulter 27 bildet der Außenumfang 23 des Gliedes 4 Haltemittel 30 zur abgedichteten, lagestarren bzw. formschlüssigen Verbindung mit der Bohrungsbegrenzung 17. Hierzu weist der Außenumfang 23 Vorsprünge 31, wie Zähne, Ringe o. dgl. auf. Sie dringen beim Einschieben und Einpressen des Gliedes 4 in das Material der Begrenzung 17 ein und verkrallen sich dabei. So ist ein Lösen in Richtung 12 nicht mehr möglich. Jeder Zahn 31 weist eine in Richtung 11 spitzwinklig konisch verjüngte Flanke, eine in Richtung 12 daran anschließende zylindrische Umfangsfläche und daran anschließend eine zur Achse 10 rechtwinklige Zahnflanke auf. Alle diese Flächen dringen in die Begrenzung 17 unter deren Verformung geringfügig ein. Der auf einen Zahn 31 in Richtung 12 folgende Zahn kann jeweils radial geringfügig weiter vorstehen. Z.B. liegen die genannten zylindrischen Umfangsflächen aller drei Zähne auf einem sehr spitzwinkligen, gemeinsamen Konus. In Richtung 12 schließt an den letzten Zahn 31 als Zentrierfläche eine zylindrische Ringfläche 32 an. Sie liegt abgedichtet und ohne Eindringen mit Radialpressung an der Begrenzung 17 an. Eine entsprechende, demgegenüber wesentlich längere Fläche schließt auch an die in Richtung 11 letzte Zahnlücke der Zahnung 30 an und reicht bis zur Endfläche 28.

Das Sperrglied 6 weist radial außen einen scheibenförmig durchgehenden Ring 33 und radial innen frei gegen die Achse 10 vorstehende, gleiche Zungen 34 auf. Sie sind gleichmäßig um die Achse 10 verteilt und können gegenüber ihren Zwischenabständen größere Breite haben. Der Außenumfang des Ringes 33 bildet die äußerste, ringförmige Begrenzungskante 35 des Gliedes 6. Von seiner segmentiert ringförmigen Innenkante 36 ragen die Zungen 34 aus. Die freie Endkantenfläche jeder Zunge 34 bildet eine Sperrfläche 37 zum versenkten Eingriff in den Außenumfang des Rohres 2. Beide großen Scheibenflächen 38, 39 des Gliedes 6 liegen parallel zueinander und schließen recht- bzw. scharfwinklig an die Kantenflächen 35 bis 37 an. Der Abstand zwischen den Flächen 36, 37 kann größer als der Abstand zwischen den Flächen 35, 36 sein, z.B. doppelt so groß. Das Glied 6 besteht zweckmäßig aus härtbarem oder gehärtetem Stahl, nämlich Federstahl. Die Kantenfläche 35 liegt mit geringstem Radialspiel der Begrenzung 17 unmittelbar gegenüber und flankiert mit der Fläche 38 eine scharfe Ringkante 40. Diese liegt unmittelbar im Anschluß an die Begrenzung 17 linienförmig an der Begrenzung 18 an. Die andere Fläche 39 liegt zwischen den Kanten 35, 36 bzw. bis zur Kante 35 an der Endfläche 28 an oder kann gegenüber dieser geringstes Axialspiel haben. Auch kann der radial äußerste Randbereich des Gliedes 6 in dieser Weise zwischen den Flächen 18, 28 eingespannt sein. Ferner können die Glieder 4, 6 vormontiert aneinander gehaltert sein, beispielsweise durch bewegliche Verbindung der Flächen 28, 39.

Das Ausrückglied 7 bildet mit seiner der konvex gekrümmten Fläche 39 unmittelbar gegenüberliegenden Endfläche eine konische Ausrückfläche 41 mit einem Konuswinkel von 90°. Die Fläche 41 liegt mit dem größten Teil ihrer Axialerstreckung permanent innerhalb des durch die Fläche 39 gebildeten Innenkonus. Die davon abgekehrte Endfläche 42 bildet eine ebene oder in Richtung 12 konisch verjüngte Anlagefläche für die Dichtung 9. In Richtung 12 schließt bis zur Fläche 42 an die Fläche 41 eine gegenüber dieser kürzere, zylindrische Umfangsfläche 43 an. Sie ist an der Fläche 24 bzw. 25 und daher am Glied 4 gleitend geführt. Die innere, zylindrische Umfangsfläche 44 des Gliedes 7 ist entsprechend der Umfangsfläche 19 an das Rohr 2 angepaßt und schließt spitzwinklig oder über eine schmalste Phase an die Fläche 41 an.

Das Ausrückglied 8 weist nur zwei Abschnitte 45, 46 unterschiedlicher Außenweite auf. Benachbart zur Dichtung 9 und an diese anschließend ist ein nach außen vorstehender Bund 45 vorgesehen. An den schließt in Richtung 12 der schlankere und längere Abschnitt 46 an. Die innere Endfläche, nämlich die des Bundes 45, bildet eine ebene oder in Richtung 11 konisch verjüngte Anlagefläche 47 für die Dichtung 9. Diese ist so permanent zwischen den Flächen 42, 47 eingespannt oder liegt an diesen Flächen bei unbetätigter Entriegelung 14 nahezu spannungsfrei an. Die äußere, innerhalb oder außerhalb der Glieder 3, 4 liegende Endfläche 48 des Abschnittes 46 bildet eine Betätigungs- bzw. Druckfläche 48 zum Verschieben der Einheit 14 in Richtung 11 gegen die Federkraft der Glieder 6, 9. Die innere Umfangsfläche 49 ist anschließend an die Fläche 47 und über den größten Teil ihrer Länge zylindrisch. Die Fläche 49 ist, wie anhand der Flächen 19, 44 beschrieben an das Rohr 2 angepaßt.

Der bis zur Fläche 47 zylindrische Außenumfang 51 des Bundes 45 geht in den bis zur Fläche 48 zylindrisch durchgehenden Außenumfang 52 des Abschnittes 46 über eine ringförmige Schulter 50 über. Sie ist wie die Ringfläche 27 konisch und liegt bei unbetätigter Entriegelung 14 als Anschlag an dem Gegenanschlag 27 an. Diese Anlage kann bei Fehlen des Mediendruckes spielfrei bzw. unter geringer Spannung erfolgen, nämlich unter der Federkraft der Glieder 6, 9, wenn dabei die Flächen 39, 41 aneinander anliegen. Vom Mediendruck wird die Dichtung 9 nur auf der stromabwärtigen bzw. der den Gliedern 6, 7 zugekehrten Seite ihrer radialen Anlagezonen belastet, so unter Quetschverformung gegen die Fläche 47 angepreßt bzw. der gegenseitige Anlagedruck der Flächen 27, 50 verstärkt.

Zum leichteren Einführen des Rohres 2 geht der Durchlaß 44 in einen bis zur Fläche 42 erweiterten, gegenüber ihm kürzeren Trichter 53 über. Der Innenumfang 49 geht entsprechend in einen bis zur Fläche 48 erweiterten Trichter 54 über. Im Kupplungszustand dringen die Sperrflächen 37 und daran anschließende Teile der Fläche 39 unter Bildung einer Vertiefung 56 in den Außenumfang des Mantels des Rohres 2 mit Abstand vom Ende 21 ein. Dadurch ist ein formschlüssiger Sperreingriff 55 gebildet. Auf das Rohr 2 in Richtung 12 wirkende Kräfte, wie der auf die Fläche 21 wirkende Mediendruck, verstärken die Radialkraft dieses Sperreingriffes. Das Sperrglied 6 liegt dabei in einem mit dem Inneren des Rohres 2 verbundenen Raum 57. Der ist am Außenumfang von der Fläche 18 begrenzt. Der Fläche 18 liegt die konkave Krümmungsfläche 38 des Gliedes 6 direkt gegenüber. Eventuelle Bewegungen des Gliedes 7 werden durch das Medium gedämpft.

Zum Entfernen des Rohres 2 wird es bzw. die Kupplung 1 zuvor vom Mediendruck befreit. Dann wird mit den Fingern einer Hand direkt oder mit einem über das vorstehende Rohr 2 gestülpten Handwerkzeug in Richtung 11 gegen die Fläche 48 gedrückt. Dadurch hebt der Anschlag 50 vom Gegenanschlag 27 ab. Die Dichtung 9 wird axial gequetscht. Dadurch preßt sie stärker gegen die Anlagefläche 25 und den Außenumfang des Rohres 2. Nach Erreichen einer ausreichend hohen Vorspannung der Dichtung 9 beginnt diese an ihren einander gegenüberliegenden Umfangs- und Anlageflächen in Richtung 11 zu gleiten. Dabei nimmt sie das Glied 7 mit. Dieses liegt mit seiner Fläche 41 bereits an den Flächen 39 der Zungen 34 an oder mit geringstem Axialabstand von diesen Flächen 39. So gleitet nach einem kurzen Bewegungsweg des Gliedes 7 die Fläche 41 an den Flächen 39. Dadurch werden die Zungen 34 unter Erhöhung der Spannung des Gliedes 6 radial nach außen gedrückt, bis ihre Enden bzw. Sperrflächen 37 aus den Vertiefungen 56 herausbewegt sind und im Radialabstand vom zylindrischen Außenumfang des Rohres 2 liegen. Das Rohr 2 kann nun in Richtung 12 für sich vollständig herausgezogen werden. Die Fläche 41 kann dabei nur in Berührung mit den Zungen 34 und nicht mit dem Ring 33 kommen.

Danach wird das Glied 8 von der Betätigungs- bzw. Lösekraft befreit. Das Glied 6 bzw. die Zungen 34 federn in Richtung 12 zurück und nehmen über die Flächen 39, 41 den Ring 7 mit. Dieser nimmt über die Fläche 42 die Dichtung 9 und diese über die Fläche 47 das Glied 8 mit, bis die Flächen 27, 50 aneinander anliegen. Die Dichtung 9 entspannt dabei axial weniger als radial durch entsprechende Ausdehnung, weil zuvor die radiale Spannung größer als die axiale Spannung ist. Soll nun ein Rohr 2 wieder angeschlossen und in Sperreingriff 55 gebracht werden, so ist es lediglich mit seinem Ende 21 voraus in Richtung 11 durch die Glieder 8, 9, 7, 6 bis zum Anschlag 20 einzuführen. Erreicht das Ende 21 den Innenumfang der Dichtung 9, so wird diese wieder radial gegen die Fläche 25 vorgespannt. Dadurch nimmt ihre axiale Ausdehnung zu. Diese Ausdehnung wird auf den Ring 7 und von diesem auf das Sperrglied 6 übertragen. So werden, abgestützt durch die Flächen 27, 50, die Sperrflächen 37 geringfügig radial nach außen bewegt, bevor das Ende 21 sie erreicht und zusätzlich aufweitet. Das Ende 21 gleitet dann an den Enden der Zungen 34 entlang, bis es den Anschlag 20 erreicht hat. Dabei kann die Fläche 39 von der Fläche 41 geringfügig abheben. Dann dringen die Zungenenden unter Bildung der Vertiefungen 56 in das Rohr 2 ein. Dabei kann die Eindringtiefe durch Anschlag der Fläche 39 an der Fläche 41 begrenzt sein. Keines der Glieder 4, 7, 8 ist geschlitzt, so daß die Endflächen 28, 29, 41, 42 und 47, 48 jeweils ununterbrochen ringförmig durchgehen.

Die Dichtung 9a kann auch gemäß Fig. 2 als Nutring ausgebildet sein, dessen U-förmiges Querschnitt 2 in Richtung 11 ausragende, ringförmige Dichtlippen bildet. Die radial äußere Dichtlippe liegt mit ihrem Ende an den Flächen 25, 42 und die radial innere Dichtlippe am Außenumfang des Rohres 2 sowie ebenfalls an der Fläche 42 an. Dringt das zu leitende Medium unter Druck in die Ringnut zwischen den Dichtlippen ein, so werden diese radial auseinandergepreßt. Dadurch wird ihre Dichtungspressung erhöht. Die Glieder 7, 8 können auch eine starr verbundenen oder einteilige Einheit bilden. Hierfür sind sie am Außenumfang über einen Mantelabschnitt miteinander zu verbinden. Der bildet die Anlagefläche 25 für die Dichtung 9. Der Abschnitt 46 weist dann am Außenumfang eine Ringnut zur Aufnahme einer weiteren Dichtung 9 bzw. 9a auf. Sie liegt an der Fläche 24 bzw. 46 dichtend an. Vorteilhaft ist es jedoch, nur eine einzige Dichtung 9 vorzusehen.

Den Figuren 1 und 3 ist zu entnehmen, daß die Glieder 7,8,9 einen größeren Lösehub als das Glied 6 ausführen können, weil das Glied 6 am Ende des Lösehubes an der Fläche 18 anschlägt. Dieser Anschlag 18 verhindert eine Überdehnung des Sperrgliedes 6. Dessen Außendurchmesser bzw. ununterbrochene Kante 35 kann radial zentriert an der Bohrung 17 anliegen und in Ruhestellung kann trotzdem der Ring 33 zwischen den Flächen 18, 28 noch ein geringes Axialspiel haben. In dieser Ruhestellung stehen die Glieder 7,8,9 gleich wie in der Sperrstellung, weil das Sperrglied 6 bei entnommenem Rohr 2 sie federnd in diese Stellung überführt. Das Sperrglied 6 kann dann aber trotzdem nicht in seine ebene Entspannungslage zurückkehren, weil es durch Anlage an der Fläche 41 des Ausrückgliedes 7 daran gehindert wird. Dies wird noch weiter durch Anschlagmittel 60 verbessert, mit welchen der Weg des Ausrückgliedes 7 in Richtung 12 begrenzt ist. Hierzu ist die Umfangsfläche 43 in Richtung 12 der Achse 10 spitzwinklig angenährt bzw. konisch und die Gegenfläche 61 komplementär schräg bzw. konisch. Diese Gegenfläche 61 ist durch das in Richtung 11 erweiterte Ende der Bohrung 25 gebildet, liegt im Abstand von der Dichtung 9 und reicht so bis zur Fläche 28, daß die Fläche 43 in Sperr-und Ruhestellung gegenüber der Fläche 28 zurückversetzt ist. Die Fläche 41 des Ausrückgliedes 7 geht radial außerhalb der linienförmigen Anlage an der konvexen Fläche 39 der Zungen 34 in eine weniger stark gegenüber der Achse 10 geneigte, stumpfwinklige oder konische Fläche über, welche bis zur Umfangsfläche 43 reicht. Beim Lösehub liegt zuerst daher das Sperrglied 6 nur mit der genannten Linienberührung an der Fläche 41 an und bei weiterem Hubweg oder nach Ausrü- cken des Sperreingriffes 55 liegt auch die stumpfwinkligere Anschlußfläche an der Fläche 39 bzw. am Ring 33 an, so daß dieser gut abgestützt ist. Der Abstand zwischen den Flächen 42,47 der Ausrückglieder 7,8 ist in Sperr- und in Ruhestellung größer als die axiale Ausdehnung der Dichtung 9, so daß diese nicht unter axialer Druckbelastung steht.

Der Außenumfang 23 des Führungsgliedes 4 weist eine Ringnut 59 mit eingesetzter Dichtung 58, wie einen O-Ring, auf, welcher zwischen der Endfläche 28 und den Zähnen 31 dicht am Abschnitt 17 der Bohrung 16 anliegt. Die Flächen 27,50 wirken bei Axialbelastung in Richtung 12 selbstzentrierend auf das Ausrückglied 8, weil dieses sowohl gegenüber dem Rohr 2 als auch gegenüber der Hülse 4 Radialspiel hat. Entsprechend wirken auch die Flächen 41, 39 selbstzentrierend auf das Ausrückglied 7, insbesondere während des Lösungshubes. Die zentrierenden Radialbewegungen des Ausrückgliedes 7 werden jedoch in der Sperr- und Ruhestellung aufgehoben, weil die Flächen 43,61 eine radialspielfreie Zentrierung des Gliedes 7 bewirken. Infolge ihrer großen Radialpressung kann die Dichtung 9 beim kurzen, für die Herstellung des Sperreingriffes 55 in Richtung 12 hervorgerufenen Rückhubes durch das Rohr 2 bis zur Anlage an der Fläche 47 mitgenommen werden, so daß sie bei Druckstößen des Mediums im Rohr 2 nicht mehr in Richtung 12 bewegt wird.

Auch die Anlagefläche 25 für die Dichtung 9 geht ununterbrochen bzw. ungeschlitzt durch, wodurch die Dichtung 9 geschont wird. Die Dichtung 9 kann auch bei Druckstößen des kanalisierten Mediums axial nicht wandern, wodurch ihre Dichtwirkung verbessert ist. Durch die erfindungsgemäße Ausbildung ergibt sich ein äußerst einfacher Aufbau der Kupplung 1 sowie eine sehr kompakte und kleine Bauweise. Bei einem Durchmesser des Rohres von z.B. 4 mm sind die gezeigten Maßverhältnisse besonders günstig.

Zur Montage werden die Glieder 8, 9, 7 und ggf. 6, eventuell als vormontierte Einheit, in Richtung 12 in das Glied 4 eingesetzt. Dann wird das Glied 4 bis zum Anschlag in den Körper 3 in Richtung 11 eingesetzt. Der Körper 3 kann auch ein Steckergehäuse sein. Dessen Mantel umgibt das Glied 4 und hat gegenüber diesem höchstens drei- oder zweifach so große Dicke. Die angegebenen Eigenschaften gelten sinngemäß sowohl bei eingesetztem als auch bei entferntem Rohr 2. Diese Eigenschaften sowie die angegebenen Wirkungen können genau oder nur im wesentlichen bzw. ungefähr wsie beschrieben vorgesehen sein und je nach den Erfordernissen auch stärker davon abweichen.

## Patentansprüche

1. Leitungskupplung für Leitungsstränge (2), wie Rohrleitungen von Schmiervorrichtungen o. dgl., mit einem eine Kupplungsachse (10) bestimmenden Grundkörper (3) zum Einführen des Leitungsstranges (2) in einer Steckrichtung (11), mit einer Verriegelung (13), die bei nicht eingesetztem Leitungsstrang (2) in einer Ruhestellung, bei eingesetztem sowie gesperrtem Leitungsstrang (2) in einer Sperrstellung bzw. bei eingesetztem sowie ungesperrtem Leitungsstrang (2) in einer Lösestellung steht und deren Sperrglied (6) in der Sperrstellung in einer der Steckrichtung (11) im wesentlichen entgegengesetzten Lösungsrichtung (12) gegenüber dem Grundkörper (3) sperrend mit Sperrflächen (37) unmittelbar in den Leitungsstrang (2) eingreift, dadurch gekennzeichnet, daß eine Entriegelung (14) mit Ausrückgliedern (7,8) zur Lösung des Sperreingriffes (55) in den Leitungsstrang (2) durch Überführung mit einer Lösekraft in die Lösestellung, eine die Lösekraft übertragende Dichtung (9) zur Anlage am Leitungsstrang (2) und zur abgedichteten Abstützung am Grundkörper (3) und/ oder mindestens eines der folgenden Merkmale vorgesehen sind:
a) die Entriegelung (14) löst den Sperreingriff (55) allein durch axiale Betätigung an einer Druckfläche (48),
b) das entspannte Sperrglied (6) ist annähernd eben scheibenförmig,
c) die Dichtung (9) hat quer zur Steckrichtung (11) eine größere Dichtungspressung als parallel zur Steckrichtung (11),
d) der Querschnitt der Dichtung (9) ist in Steckrichtung (11) größer als quer dazu,
e) die Entriegelung (14) ist frei von Steigungsgliedern, wie Gewinden oder Verschraubungen,
f) das Sperrglied (6) ist bei nicht eingesetztem Leitungsstrang (2) und bei Ruhestellung der Entriegelung (14) nicht entspannt,
g) das Sperrglied (6) gleitet beim Lösen mit einer im Querschnitt konvexen Fläche (39) an der Entriegelung (14),
h) das Sperrglied (6) bildet radial außen einen durchgehenden Ringkranz (33) mit einer Kantenfläche (35) als äußerte ringförmige Begrenzung, und
i) das Sperrglied (6) hebt beim Einsetzen des Leitungsstranges (2) von der Entriegelung (14) ab.

2. Leitungskupplung nach Anspruch 1, dadurch gekennzeichnet, daß das Sperrglied (6) im Querschnitt im Sperreingriff (55) im wesentlichen bis zu seiner radial äußersten Begrenzung (35) gekrümmt ist, daß insbesondere das Sperrglied (6) eine kleinere Materialdicke als der Leitungsstrang (2) hat, und daß vorzugsweise das Sperrglied (6) für den Sperreingriff (55) Zungen (34) aufweist, deren Länge größer, z. B. doppelt größer, als die Radialerstreckung des Ringkranzes (33) ist.

3. Leitungskupplung nach Anspruch 1 oder 2, dadurch gekennzeichnet, daß die Entriegelung (14) beim Herausziehen des Leitungsstranges (2) einen ununterbrochen durchgehenden Ringkranz (33) des Sperrgliedes (6) nicht berührt, daß insbesondere das Sperrglied (6) bei der Überführung in den Sperreingriff (55) und der Bildung einer Vertiefung (56) in den Außenumfang des Leitungsstranges (2) eingreift, und daß vorzugsweise das Sperrglied (6) im wesentlichen bis zur Kantenfläche (35) gegenüber dem Grundkörper (3) abgestützt ist.

4. Leitungskupplung nach einem der vorgehenden Ansprüche, dadurch gekennzeichnet, daß das Sperrglied (6) zwischen zwei Stirnflächen (18,28) des Grundkörpers (3) liegt, von denen eine konisch ist, daß insbesondere eine Stirnfläche (18) einen Innenkonus ist, und daß vorzugsweise das Sperrglied (6) dem Innenkonus (18) mit einer konkaven Krümmungsfläche (38) unmittelbar gegenüberliegt.

5. Leitungskupplung nach einem der vorgehenden Ansprüche, dadurch gekennzeichnet, daß die Entriegelung (14) eine gegenüber dem Grundkörper (3) bewegbare Ausrückeinheit (15) mit mindestens zwei gesonderten Ausrückgliedern (7,8) aufweist, deren beim Lösen gegen eine konvexe Fläche (39) des Sperrgliedes (6) drückende Ausrückfläche (41) unter einem Winkel von höchstens 60° oder 50° schräg zur Steckrichtung (11) liegt, daß insbesondere die Ausrückfläche (41) mit einem Konuswinkel von etwa 90° konisch ist, und daß vorzugsweise an die Ausrückfläche (41) unmittelbar eine Zylinderfläche (43) anschließt, welche am Grundkörper (3) gleitend geführt ist.

6. Leitungskupplung nach einem der vorhergehenden Ansprüche, dadurch gekennzeichnet, daß der Leitungsstrang (2) gegenüber mindestens einem der Ausrückglieder (7,8) Radialspiel hat, insbesondere mindestens eines der Ausrückglieder (7,8) Radialspiel gegenüber dem Grundkörper (3) hat, und daß vorzugsweise ein Ausrückglied (8) und der Grundkörper (3) über Anschlagflächen (27,50) ineinandergreifen, von denen mindestens eine schräg zur Steckrichtung (11) liegt.

7. Leitungskupplung nach einem der vorhergehenden Ansprüche, dadurch gekennzeichnet, daß ein im Kraftfluß der Lösekraft stromaufwärts liegendes Ausrückglied (8) nur zwei Abschnitte (45,46) unterschiedliche Außenweite hat, daß insbesondere das stromaufwärtige Ausrückglied (8) die Druckfläche (48) hat, die zum Überführen in die Lösestellung in Steckrichtung (11) manuell zu drücken ist, und daß vorzugsweise einer der Abschnitte (46) bis zur Druckfläche (48) zylindrisch ist.

8. Leitungskupplung nach einem der vorhergehenden Ansprüche, dadurch gekennzeichnet, daß der Grundkörper (3) ein Gehäuse (5) und ein gesondertes Führungsglied (4) für die Entriegelung (14) aufweist, das vollständig innerhalb des Gehäuses (5) liegt, daß insbesondere äußere Endflächen (29) des Gehäuses (5) und des Führungsgliedes (4) im wesentlichen ebenengleich liegen, und daß vorzugsweise Haltemittel (30) zur Verbindung des Gehäuses (5) mit dem Führungsglied (4) radiale Vorsprünge (31) zur gegenseitigen Verkrallung bzw. auf einem spitzwinkligen Konus liegende Umfangsflächen aufweisen.

9. Leitungskupplung nach einem der vorhergehenden Ansprüche, dadurch gekennzeichnet, daß ein Führungsglied ((4) des Grundkörpers (3) mindestens so lang wie ein stromaufwartiges Ausrückglied (8) der Entriegelung (14) ist, daß insbesondere ein unmittelbar gegen das Sperrglied (6) zu drückendes stromabwärtiges Ausrückglied (7) der Entriegelung (14) einen Einführtrichter (53) für den Leitungsstrang (2) hat bzw. gegen den Leitungsstrang (2) weniger weit vorsteht als das Sperrglied (6), und daß vorzugsweise das innere Ende des Führungsgliedes (4) eine der Stirnflächen (28) bildet, an welcher das Sperrglied (6) im wesentlichen bis zur Kantenfläche (35) abgestützt ist.

10. Leitungskupplung nach einem der vorhergehenden Ansprüche, dadurch gekennzeichnet, daß ein einteiliges Gehäuse (5) des Grundkörpers (3) eine zwischen ihrem äußeren Ende und dem inneren Ende (21) des Leitungsstranges (2) nur einmal abgestufte Bohrung (16) hat, daß insbesondere der Leitungsstrang (2) im Bereich seines inneren Endes (21) Radialspiel gegenüber dem Grundkörper (3) hat, und daß vorzugsweise die Entriegelung (14) als vormontierte Einheit in das Gehäuse (5) eingesetzt ist.

11. Leitungskupplung nach einem der hervorgehenden Ansprüche, dadurch gekennzeichnet, daß zur Anschlagbegrenzung des inneren Endes (21) des Leitungsstranges (2) eine Schrägfläche (20) vorgesehen ist, daß insbesondere die Ausrückglieder (7,8) der Entriegelung (14) ungeschlitzt sind, und daß vorzugsweise zusätzlich zur Dichtung (9) eine weitere Dichtung (58) vorgesehen ist, die in einer Ringnut (59) liegt.

12. Leitungskupplung nach einem der hervorgehenden Ansprüche, dadurch gekennzeichnet, daß Anschlagmittel (60) zur formschlüssigen Wegbegrenzung eines unmittelbar benachbart zum Sperrglied (6) liegenden Ausrückgliedes (7) der Entriegelung (14) in bzw. entgegen Steckrichtung (11) vorgesehen sind, daß insbesondere die Anschlagmittel (60) in Sperr- bzw. Ruhestellung aneinander zum Lösen abhebbar anliegende Anschlagflächen (43,61) aufweisen, und daß vorzugsweise mindestens eine der Anschlagflächen (43,61) schräg zur Steckrichtung (11) liegt bzw. spitzwinklig konisch ist oder daß zur Begrenzung der Lösestellung für das Sperrglied (6) eine zur Steckrichtung (11) quer liegende Anschlagfläche (18) vorgesehen ist.

13. Leitungskupplung nach einem der vorhergehenden Ansprüche, dadurch gekennzeichnet, daß ein Ausrückglied (7) zwei radial beabstandete Druckflächen (41) für das Sperrglied (6) aufweist, daß insbesondere die Druckflächen (41) beim Verschieben des Ausrückgliedes (7) nacheinander in Eingriff mit dem Sperrglied (6) kommen, und daß vorzugsweise ein Führungsglied (4) des Grundkörpers (3) am Außenumfang (23) mit einer weiteren Dichtung (58) gegenüber einem Gehäuse (5) des Grundkörper (3) abgedichtet ist.
